Europäisches Patentamt

European Patent Office

Office européen des brevets

(11) Publication number: **0 483 666 A2**

# EUROPEAN PATENT APPLICATION

(21) Application number: **91118139.4**

(51) Int. Cl.5: **G05B 19/403**

(22) Date of filing: **24.10.91**

(30) Priority: **31.10.90 JP 294505/90**

(43) Date of publication of application:
**06.05.92 Bulletin 92/19**

(84) Designated Contracting States:
**CH DE LI**

(71) Applicant: **MITSUBISHI DENKI KABUSHIKI KAISHA**
**2-3, Marunouchi 2-chome Chiyoda-ku**
**Tokyo 100(JP)**

(72) Inventor: **Katou, Sachiko, c/o Mitsub. Denki Mekatoronikusu**
**Sofutouea K. K., 1-14, Yadaminami 5-chome**
**Higashi-ku, Nagoya-shi, Aichi(JP)**
Inventor: **Katou, Tatsuya, c/o Mitsub. Denki Mekatoronikusu**
**Sofutouea K. K., 1-14, Yadaminami 5-chome**
**Higashi-ku, Nagoya-shi, Aichi(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) Method of program execution and apparatus thereof.

(57) A system for reversing a program of the type having first commands which remain valid until changed and second commands which do not remain valid after execution. The system includes a reader (2) for processing the program in a forward direction and for segregating and storing the first commands in order of issuance. Thereafter, a reader (3) for processing the program in a reverse direction reads each program instruction starting with the last program instruction. During operation, a reverse execution unit (5) recognizes and changes each first command which should be exchanged for a preceding or complementary first command having the same type. The present invention also performs conversion operations upon designated preceding first commands. Thus, the present invention is able to accurately perform in the reverse direction each step of a program written in the forward direction.

Fig. 1

5 — Reverse execution start point Reverse execution end point

6 — Numerical data buffer

12 — Preceding block command type storing buffer

2 — Forward-direction reading means

1 — NC program

3 — Reverse-direction reading means

4 — Numerical analysis means

7 — Modal movement command storing means

9 — Modal command storing means

13 — Drive controlling means

15 — Modal movement command reverse-execution means

16 — Modal command reverse-execution means

18 — Switch command inverting means

19 — Coordinate value converting means

11 — Command type storing means

17 — Modal command converting means

8 — Modal movement command storing buffer

10 — Modal command storing buffer

Type    Data

14 — Drive motor

## BACKGROUND OF THE INVENTION

### Field of the Invention

The present invention relates to a numerical control unit (hereinafter referred to as the "NC unit") and more particularly to a unit for controlling the reciprocative machining or the like of a workpiece.

The present invention also can be used with programmable controllers and the like.

### Description of the Prior Art

A known NC unit which performs reciprocative machining on a workpiece is described in Japanese Patent Disclosure Publication No. 23305 of 1989. This known NC unit is designed to read a program in the forward and reverse directions, which reduces the program size in half, since previous systems required separate forward and backward operating programs. This enables the NC unit to also reduce the program writing time and the program storage capacity in half.

However, this known NC unit fails during reverse direction execution of a program (initially read in the forward direction), when the program includes commands that remain valid during subsequent machining steps after the command is specified. These commands (which will also be referred to as instructions or program steps) are known as "mode" or "modal" commands, and include speed commands, taper angle commands, machining condition commands, diameter compensation commands, modal movement commands, etc.

## SUMMARY OF THE INVENTION

It is accordingly an object of the present invention to overcome the disadvantages of the prior art by providing an NC unit which does not fail when a program containing mode and mode movement commands is run the forward and reverse directions when performing reciprocative machining on a workpiece. It is a further object of the present invention to provide an NC program controller which is able to properly process mode commands stored during forward execution, when operating in the reverse order during reverse execution.

It is another object of this invention to store a plurality of mode command types in their order of issuance in one area (i.e., not separated by type into separate buffers), thereby minimizing the memory requirements of the system.

It is also an object of this invention to store in a buffer only mode movement commands from the program, which are followed by non-mode movement commands, so that the mode movement commands may be executed in the reverse direction using a small amount of memory.

The present invention also uses during reverse execution, a command switching unit which inverts any on/off switch commands encountered, in order to eliminate the need to store the switching commands in a buffer.

## BRIEF DESCRIPTION OF THE DRAWINGS

Fig. 1 is a block diagram illustrating one embodiment of the present invention.

Fig. 2 is a flowchart showing a sequence of an ordinary machining operation.

Fig. 3 is a flowchart showing a sequence of a forward-direction machining operation.

Fig. 4 is a flowchart illustrating a sequence of a reverse-direction machining operation.

Figs. 5a-5d provide examples of an NC program, modal command storing buffer data, and modal movement command buffer data.

## DESCRIPTION OF THE PREFERRED EMBODIMENT

Embodiments of the present invention will now be described with reference to the drawings.

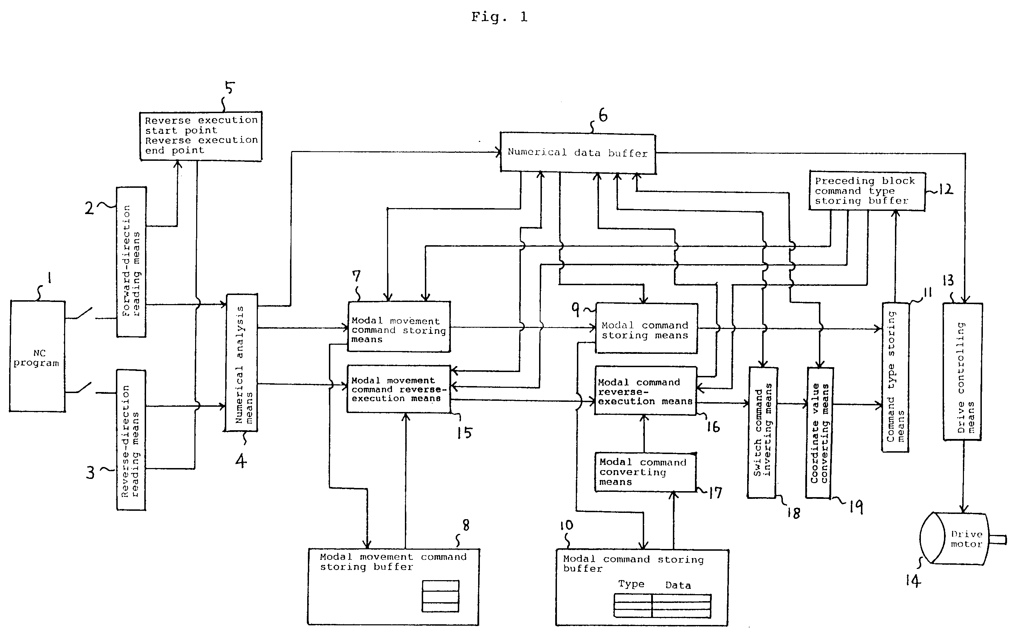

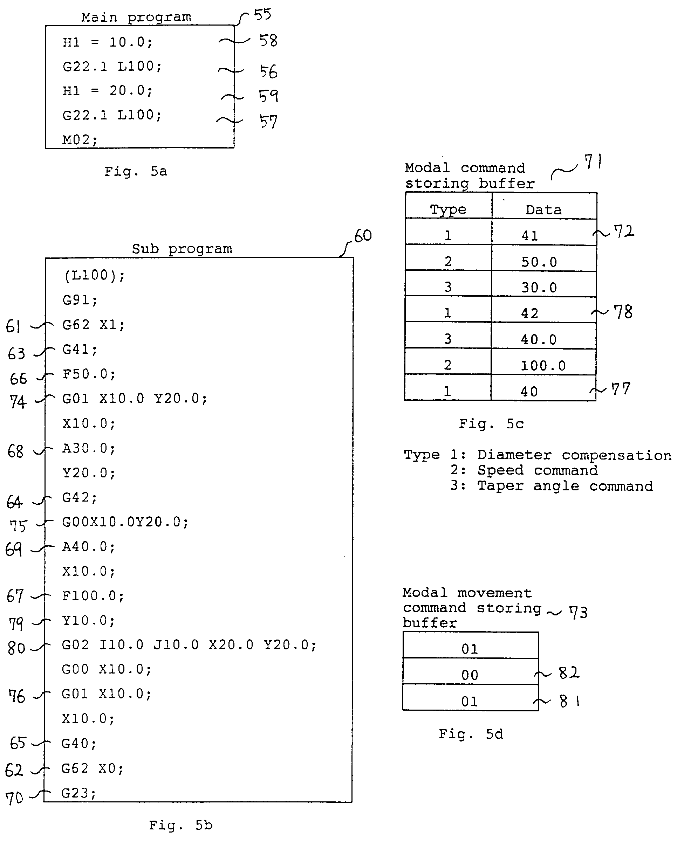

Fig. 1 illustrates one embodiment of the present invention, which includes an NC program 1 (set forth in more detail in Figs. 5a and 5b), a forward-direction reader 2 for reading the NC program 1 in the forward direction, a reverse-direction reader 3 for reading the NC program 1 in the reverse direction, a numerical analyzer 4 for analyzing and converting each block (i.e., each command in the programs in Figs. 5a and 5b) read from the NC program 1 into numerical data. The NC unit also includes a reverse-execution start/end position recorder 5 which stores the forward-direction execution start and end positions within the NC program 1, and a numerical data buffer 6 for storing numerical data for each block/command provided by the numerical analyzer 4.

A modal movement command storing controller 7 (Fig. 1) identifies mode movement commands in the program by testing each current and preceding command during forward operation. When the preceding command constituted a mode movement command, but the current command does not, controller 7 stores the necessary information (the preceding command) in the mode movement command storage buffer 8 (as illustrated in Fig. 5d). Mode movement command storage buffer 8 stores information representative of the mode movement commands in the order of issuance. Thus, in Fig. 5b only mode movement commands 74-76 from the subroutine are stored in storage buffer 8 (Fig.

5d). Mode command storing controller 9 stores the types and values for each mode command in the order of issuance during forward processing in mode command storage buffer 10 (see Fig. 5c). Thus, each mode command 63-69 (Fig. 5b) is stored in storage buffer 10 (Fig. 5c).

The command type storing controller 11 records which mode command or mode movement command exists in the appropriate block of the NC program 1 in order to determine during forward and reverse processing which type of command resides in the next and preceding blocks. A preceding block command type storage buffer 12 stores the command types, and a drive controller 13 controls a drive motor 14 in accordance with the data from the numerical data buffer 6. Mode movement command reverse execution unit 15 reads the type storage buffer 12, the analyzer 4 and the data buffer 6 and the mode movement command storage buffer 8. When the current command within the data buffer 6 does not constitute a mode movement command, and the preceding command (read from the type storage buffer 12) does represent a mode movement command, the reverse execution unit 15 adjusts the mode movement command data in the numerical data buffer 6 accordingly (which will be explained in more detail below).

Mode command reverse execution unit 16 reads the mode command storage buffer 10, the type storage buffer 12 and the data buffer 6, and adds a mode command from the storage buffer 10 with the contents of the numerical data buffer 6, when the preceding block command type storing buffer 12 indicates that a preceding command represents a mode command. Mode command converter 17 converts the data from storage buffer 10, which requires conversion when this data is to be written into the data buffer 6.

Switch command inverter 18 inverts an on/off command and sets the result in the numerical data buffer 6 when there is a switch command, and coordinate value convertor 19 changes the axis data and the circular arc rotating direction of the numerical data buffer 6 so that the axial movement direction can be reversed.

Before running reverse machining, the program 55 and subprogram 60 are initially processed (in the forward direction) in order to set up the necessary buffers 8, 10 and 12. During reverse operation, each command is written into the numerical data buffer 6 prior to being executed by driving controller 13. While stored in buffer 6, the present invention alters this data (via reverse execution units 15 and 16, switching inverter 18 and coordinate value convertor 19) in order ensure that the reverse operations match the forward operation.

The following discussion will better illustrate how the system of Fig. 1 updates each command in data buffer 6 during reverse operation.

The above described NC unit includes three possible patterns of operation, normal machining, machining in a defined forward direction, and machining in a reverse direction.

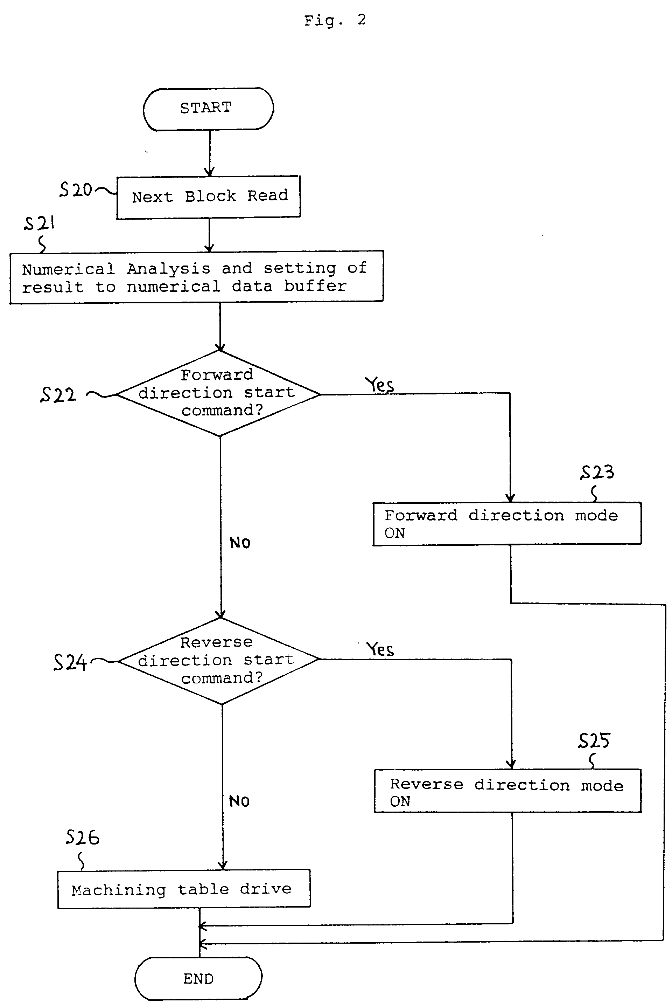

Fig. 2 illustrates a first pattern (normal machining), wherein the forward-direction reader 2 reads each block/command from the NC program 1 (S20), and numerical analyzer 4 analyzes numerical values therefrom and sends the result to the numerical data buffer 6 (S21). If the numerical analyzer 4 indicates that a forward-direction machining command code exists in the NC program 1 (S22), a forward direction mode is switched on (S23), and if a reverse-direction machining command code exists (S24), a reverse direction mode is switched on (S25). If neither the forward- nor the reverse-direction machining command codes exist, the drive controller 13 drives the machining table in accordance with the data in the numerical data buffer 6 (S26).

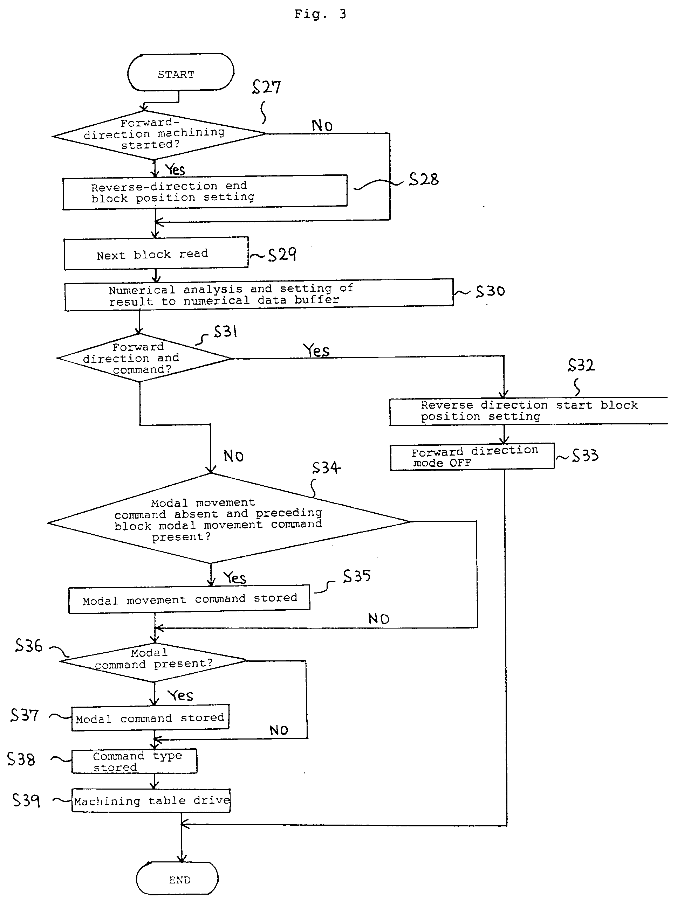

The second pattern (illustrated in Fig. 3) represents the operation of forward-direction machining once the forward direction mode has been switched on during normal machining. The block at which forward-direction machining starts (S27), also represents the end block for reverse execution. Hence, the position of the starting block for forward execution is stored in the reverse execution start/end block position recorder 5 (S28). Thereafter, the forward-direction reader 2 reads the next block from the NC program 1 (S29), and the numerical analyzer 4 analyzes the numerical values and writes the result to the numerical data buffer 6 (S30).

If the results of numerical analysis determine that the block contains a forward direction end command (S31), which also constitutes a reverse execution start block, the position of the current block is recorded in the reverse execution start/end block position buffer 5 (S32) as the reverse execution start block and the forward direction mode is switched off (S33). Next, the mode movement command storing controller 7 tests the numerical data buffer 6 to determine if a mode movement command exists in the current block and the preceding block command type storage buffer 12 to determine if a mode movement command exists in a preceding block (S34). If a mode movement command is not stored in the numerical data buffer 6, and the preceding block command storage buffer 12 indicates that a mode movement command is stored in the preceding block, the command storing controller 7 writes the mode movement command in the preceding block into the mode movement command storing buffer 8 (S35) as illustrated in Fig. 5d. Next, the mode command storing controller 9 determines whether a mode command exists (S36) in the current block, and if so the mode command storing controller 9 records the type and value of this command in the mode command storage buffer 10 (S37) as illustrated in Fig. 5c. The command type storing controller 11 records the presence or absence of the mode movement command in the preceding block command type storage buffer 12 (S38). Finally, the drive controller 13 drives the machining table in accordance with the data of the numerical data buffer 6 (S39).

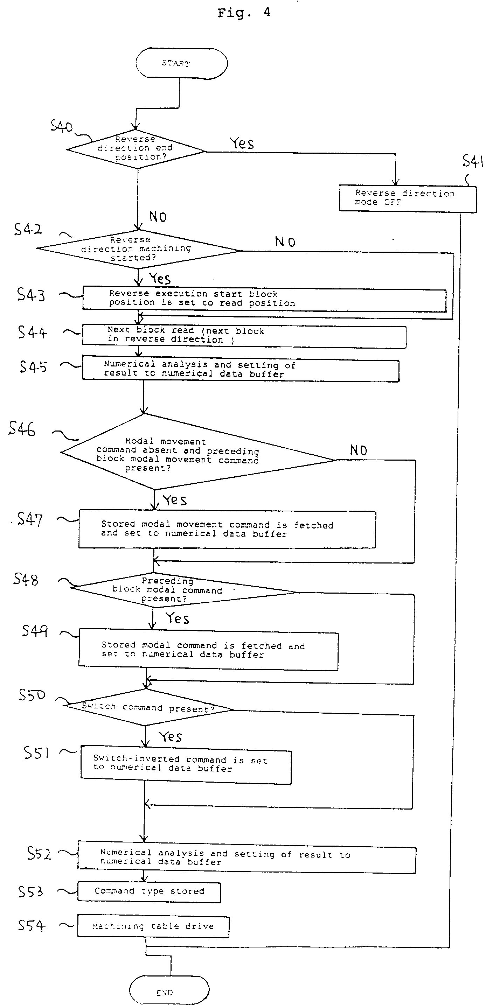

The third pattern (illustrated in Fig. 4) represents reverse-direction machining when the reverse direction mode has been switched on during a normal machining operation.

If the current block position represents a reverse-execution end block position (S40), the reverse direction mode is switched off and processing is terminated (S41). When reverse-direction machining is started (S42), the reverse execution start block position is recorded (S43) in the reverse execution start/end block position storage buffer 5. Thereafter, reverse-direction reader 3 reads the next block in the reverse direction from the NC program 1 (S44). This command is analyzed and the results are recorded in numerical data buffer 6 (S45). The mode movement command reverse execution unit 15 first determines whether the numerical data buffer 6 includes a mode movement command. If not, reverse execution unit 15 searches the preceding block command type storage buffer 12 to determine if a mode movement command precedes this command held in the data buffer 6 (S46). If a movement command is stored in a block preceding current block and the current block is not a mode movement command, the reverse execution unit 15 reads the appropriate mode movement command from the mode movement command storage buffer 8 and updates numerical data buffer 6 (S47) to ensure that the present command is performed in accordance with the correct mode movement command.

If for example, the current command represented instruction 79 (Fig. 5b), the reverse execution unit 15 would identify this to not be a mode movement command, and would search the type storage buffer 12 to determine whether a mode movement command precedes this current command. Command 75 would be identified in type storage buffer 12 as the mode movement command which precedes the current command (this mode movement command (75) would have been applicable at instruction 79 if the program were proceeding in the forward direction). Thus, reverse execution unit 15 would read the command from storage buffer 8, which corresponds to instruction 75 (i.e., "G00") and would add this information to the instruction in data buffer 6. In this example reverse execution unit 15 effectively rewrites the command "Y10.0" in its long form "G00 Y10.0".

Next, the mode command reverse execution unit 16 checks the preceding block command type storage buffer 12. If a mode command is recorded in one of the blocks preceding the current command (S48), the reverse execution unit 16 reads this mode command from the mode command storing buffer 10 and adds its value to the command in data buffer 6. Prior to this addition, if the mode command requires conversion, the mode command conversion unit 17 converts the mode command and sends the results to the numerical data buffer 6 (S49).

Thus, if the current command were 79 (Fig. 5b), the reverse execution unit 16 would search storage buffer 12 for a mode command which precedes command 79. Command 67 would be identified in storage buffer 12 as the preceding mode command and thus, reverse execution unit 16 would access storage buffer 10 and add the value "F100.0" to the command 79 to obtain "F100.0 Y10.0". Similarly, if command 62 represented the current command, then the execution unit 16 would attempt to obtain the mode command 65 from the storage buffer 10. However, command 65 represents a mode command which requires conversion (command 65 represents a "diameter compensation cancel" command). Thus, conversion unit 17 would search the storage buffer 10 for the next preceding mode command having the same type (i.e., type "1"). Conversion unit 17 would convert command "G42", which represents "rightward diameter compensation," into a "leftward diameter compensation" command (i.e., "G41") and send the converted command to data buffer 6.

The switch command inverter 18 checks whether a current command in the numerical data buffer 6 (S50) represents a switch command, and if so inverts the switch within numerical data buffer 6 (S51). The coordinate value converting means 19 reads the data of the numerical data buffer 6, and converts the axis data and the circular arc rotating direction so that the machining direction is reversed, and sets the results in the numerical data buffer 6 (S52). The command type storing controller 11 sets the presence or absence of the mode movement command and mode command to the preceding block command type storing buffer 12 (S53).

The drive controller 13 drives the machining table in accordance with the data of the numerical data buffer 6 (S54).

Figs. 5a-5d illustrate an exemplary main program 56, subprogram 60, and the contents of the mode command and mode movement command storage buffers 71 and 73 (which correspond to buffers 10 and 8 in Fig. 1) based upon the operations stored in the subprogram 60.

Fig. 5a illustrates the forward and reverse direction machining commands 56 and 57 in the main NC program. The main program also includes a diameter compensation value setting 58 for forward direction machining and a like setting 59 for reverse direction machining. The subprogram 60 labelled L100 called from the main program 55 includes a symmetrical machining ON command 61 for the X axis and a symmetrical machining OFF command 62 for the same. The subprogram also includes a "leftward diameter compensation" command 63 with respect to an advancing direction of the workpiece, a "rightward diameter compensation" command 64 with respect to the advancing direction of the workpiece and a "diameter compensation cancel" command 65. Speed commands 66 and 67, taper angle setting commands 68 and 69, a subprogram end command 70, and switch commands 61 and 62 are also illustrated. Commands 63-69 represent mode commands and commands 74-76 represent mode movement commands.

When the subprogram 60 is performed in the forward machining direction, the mode commands therefrom are stored in buffer 71 as illustrated in Fig. 5c, such as command type diameter compensation data 72, 78 and 77 from blocks 63, 64 and 65 respectively in the order of processing in the forward direction. The mode movement command storing buffer 73 stores data as illustrated in Fig. 5d, from which is seen that commands 74-76 represent the movement commands not followed (in the forward direction) by another movement command.

Reverse execution starts at block 70, such that block 62 is converted into a symmetrical machining ON command for the X axis during step S51 (Fig. 4) by the switch conversion unit 18. When mode command 65 is detected, the mode command storage buffer 71 is referenced, in which a buffer pointer is currently pointing at its diameter compensation stop command value 77. Thereafter, buffer 71 is searched by execution unit 16, in order to identify the previous data having the same type (which is located at 78, from program step 64). Thereafter, command "G42" is fetched from storage buffer 10 and converted (by converter unit 17) into "G41". This conversion changes the current command 65 "G40" to a leftward diameter compensator "G41" in order to retrace the workpiece's forward direction operation in the reverse direction.

As processing progresses in the reverse direction, the first instance is reached at steps 80, 79 where a mode movement command is not followed (in the reverse direction) by another mode movement command. Therefore, the mode movement command storing buffer 73 is referred to. Currently, the buffer pointer points to data 81. Hence, data 82, "00" (from G00 found in step 75) preceding data 81 is selected as the value which is valid for block 79.

Reverse execution is thusly performed upon each instruction up to the beginning of the subprogram 60.

It will be recognized that other paired commands, e.g., machining on and off, and commands such as an axis change command may be used as switch commands, and a machining condition command may be employed as a mode command.

It will be apparent that the invention, as described above, provides an NC unit which achieves the following results, in addition to simple forward- and reverse-direction machining:

1. Mode commands stored during forward execution are fetched and issued and executed in the reverse order during reverse execution;

2. For the forward execution of the mode commands, a plurality of mode command types are stored one area in their order of issuance (not separated by type into separate buffers), which minimizes the memory requirements of the system;

3. Only mode movement commands which are not followed by other mode movement commands are stored, so that the mode movement commands may be executed in the reverse direction using a small amount of memory;

4. During reverse execution, an on/off switch command is inverted by a command switching unit, which eliminates the need to store the switching commands.

**Claims**

1. A system for reversing a program of the type having first commands which remain valid until changed and second commands which do not remain valid after execution, comprising:

means for reading said program in a forward direction and for segregating and storing said first commands in an order of issuance;

means for reading said program in a reverse direction;

means for recognizing each of said first commands; and

means for changing said recognized first command into a first command which precedes said recognized first command in said order.

2. The system as claimed in claim 1, wherein said storing means records a type and value for each of said first commands, such that said changing means changes said recognized first command to a preceding first command of the same type.

3. A numerical control unit controlling a program of the type having mode commands and mode movement commands which remain valid after execution until changed and temporary commands which do not remain valid after execution, said program being operable in forward and reverse directions, comprising:

buffers which store mode and mode movement commands in an order of issuance during execution of said program in said forward direction;

a reader for reading said program in said forward and reverse directions; and

a converter for changing a current mode or mode movement command into a preceding mode or mode movement command stored in said buffer, wherein said preceding mode or mode movement commands represent commands of the same type as the current command.

4. A control system comprising:

mode command storing means for storing plural types of mode commands made valid for subsequent steps in a program once specified when said program is executed in a forward direction;

command storing means for storing mode commands in a storing buffer; and

command reverse execution means for determining when a current mode command must be changed into a previous or complementary mode command based upon said determination.

5. A system for controlling execution of a program having mode and non-mode commands listed therein, comprising:

means for storing in a command storing buffer each mode command that is made valid for subsequent operation once specified when the program is executed in a forward and a reverse direction;

reverse-execution means for reading and executing a mode command preceding a current mode command when said numerical control program is executed in the reverse direction.

6. The system of claim 1, wherein said first commands include mode and mode movement commands.

7. The system of claim 6, wherein said means for storing said first commands in order, further comprises:

mode and mode movement buffers for storing mode and mode movement commands therein; and

mode and mode movement storing controllers for determining which commands to store in the mode and mode movement buffers.

8. The system of claim 7, wherein said mode movement storing controller only stores mode movement commands in said mode movement buffer which are followed by non-mode movement commands.

9. The system of claim 7, wherein said mode storing controller stores a type and value for each mode command in said order of issuance in said mode buffer.

10. The system of claim 7, wherein said recognizing means includes a reverse execution unit which updates a current first command based upon a preceding first command when said reverse execution unit determines that said current first command does not represent a mode movement command and said preceding first command does represent a mode movement command.

Fig. 1

EP 0 483 666 A2

Fig. 2

```
                        ┌─────────────┐
                        │    START    │
                        └──────┬──────┘
                               │
                               ▼
   S20 ──────────┐      ┌─────────────────┐
                        │ Next Block Read │
                        └────────┬────────┘
                                 │
   S21 ──┐                       ▼
   ┌──────────────────────────────────────┐
   │ Numerical Analysis and setting of     │
   │ result to numerical data buffer       │
   └──────────────────┬───────────────────┘
                      │
                      ▼
                   ╱──────────╲
                 ╱   Forward    ╲      Yes
   S22 ───────── │ direction start│──────────────┐
                 ╲   command?    ╱                │
                   ╲──────────╱                   │
                      │                           ▼
                      │ No              ┌──────────────────────┐
                      │                 │ Forward direction mode│  S23
                      │                 │ ON                    │
                      │                 └──────────┬────────────┘
                      ▼                            │
                   ╱──────────╲                    │
                 ╱   Reverse    ╲     Yes          │
   S24 ───────── │ direction start│──────────┐     │
                 ╲   command?    ╱           │     │
                   ╲──────────╱              ▼     │
                      │              ┌──────────────────────┐
                      │ No           │ Reverse direction mode│  S25
                      │              │ ON                    │
   S26 ──┐            │              └──────────┬────────────┘
   ┌──────────────────▼───┐                     │
   │ Machining table drive │                     │
   └──────────┬───────────┘                      │
              │◄──────────────────────────────────┘
              ▼
       ┌─────────────┐
       │     END     │
       └─────────────┘
```

Fig. 3

```
              ┌──────────┐
              │  START   │
              └────┬─────┘
                   │              S27
           ╱───────┴────────╲
          ╱  Forward-         ╲        NO
         ╱ direction machining  ╲──────────────────┐
          ╲   started?         ╱                    │
           ╲─────────┬────────╱                     │
                  Yes │                              │
        ┌─────────────┴───────────┐    S28           │
        │ Reverse-direction end    │                 │
        │ block position setting   │                 │
        └─────────────┬───────────┘                  │
                      │◄─────────────────────────────┘
        ┌─────────────┴───────────┐
        │    Next block read       │   ~S29
        └─────────────┬───────────┘
        ┌─────────────┴─────────────────┐
        │ Numerical analysis and setting │  ~S30
        │ of result to numerical data    │
        │ buffer                         │
        └─────────────┬─────────────────┘
                      │          S31
            ╱─────────┴────────╲          Yes
           ╱   Forward           ╲──────────────────────────┐
           ╲  direction and     ╱                           │
            ╲   command?       ╱                   S32       │
             ╲───────┬────────╱                              │
                     │                  ┌──────────────────┐ │
                  NO │                  │ Reverse direction│ │
                     │                  │ start block      │ │
                     │                  │ position setting │ │
                     │                  └────────┬─────────┘ │
                     │                  ┌────────┴─────────┐ │
                     │                  │ Forward direction│ ~S33
                     │                  │ mode OFF         │ │
                     │                  └────────┬─────────┘ │
            ╱────────┴──────────╲  S34            │          │
           ╱   Modal movement     ╲               │          │
          ╱ command absent and      ╲    NO        │          │
         ╱ preceding block modal     ╲────────┐    │          │
          ╲ movement command present?╱        │    │          │
           ╲─────────┬──────────────╱         │    │          │
                 Yes │        S35              │    │          │
        ┌────────────┴─────────────┐          │    │          │
        │ Modal movement command   │          │    │          │
        │ stored                   │          │    │          │
        └────────────┬─────────────┘          │    │          │
                     │◄───────────────────────┘    │          │
      S36 ╱──────────┴─────────╲                    │          │
         ╱  Modal                ╲   NO              │          │
         ╲ command present?      ╱─────────┐         │          │
          ╲────────┬────────────╱          │         │          │
               Yes │                       │         │          │
      S37 ┌────────┴────────┐              │         │          │
          │ Modal command    │              │         │          │
          │ stored           │              │         │          │
          └────────┬────────┘              │         │          │
                   │◄──────────────────────┘         │          │
      S38 ┌────────┴────────┐                        │          │
          │ Command type     │                        │          │
          │ stored           │                        │          │
          └────────┬────────┘                        │          │
      S39 ┌────────┴────────┐                        │          │
          │ Machining table  │                        │          │
          │ drive            │                        │          │
          └────────┬────────┘                        │          │
                   │◄──────────────────────────────────────────┘
              ┌────┴─────┐
              │   END    │
              └──────────┘
```

Fig. 4

START

S40 — Reverse direction end position? ──Yes──►

S41 — Reverse direction mode OFF

NO

S42 — Reverse direction machining started? ──NO──►

Yes

S43 — Reverse execution start block position is set to read position

S44 — Next block read (next block in reverse direction )

S45 — Numerical analysis and setting of result to numerical data buffer

S46 — Modal movement command absent and preceding block modal movement command present? ──NO──►

Yes

S47 — Stored modal movement command is fetched and set to numerical data buffer

S48 — Preceding block modal command present?

Yes

S49 — Stored modal command is fetched and set to numerical data buffer

S50 — Switch command present?

Yes

S51 — Switch-inverted command is set to numerical data buffer

S52 — Numerical analysis and setting of result to numerical data buffer

S53 — Command type stored

S54 — Machining table drive

END

11

Main program ~ 55

```
H1 = 10.0;        ~ 58
G22.1 L100;       ~ 56
H1 = 20.0;        ~ 59
G22.1 L100;       ~ 57
M02;
```

Fig. 5a

Sub program ~ 60

```
     (L100);
     G91;
61   G62 X1;
63   G41;
66   F50.0;
74   G01 X10.0 Y20.0;
     X10.0;
68   A30.0;
     Y20.0;
64   G42;
75   G00X10.0Y20.0;
69   A40.0;
     X10.0;
67   F100.0;
79   Y10.0;
80   G02 I10.0 J10.0 X20.0 Y20.0;
     G00 X10.0;
76   G01 X10.0;
     X10.0;
65   G40;
62   G62 X0;
70   G23;
```

Fig. 5b

Modal command storing buffer ~ 71

| Type | Data |  |
|------|------|--|
| 1 | 41 | ~ 72 |
| 2 | 50.0 | |
| 3 | 30.0 | |
| 1 | 42 | ~ 78 |
| 3 | 40.0 | |
| 2 | 100.0 | |
| 1 | 40 | ~ 77 |

Fig. 5c

Type 1: Diameter compensation
     2: Speed command
     3: Taper angle command

Modal movement command storing buffer ~ 73

| | |
|--|--|
| 01 | |
| 00 | ~ 82 |
| 01 | ~ 81 |

Fig. 5d